# EUROPEAN PATENT APPLICATION

(11) **EP 0 695 615 A2**
(43) Date of publication of application: **07.02.1996**
(21) Application number: 95500111.0
(22) Date of filing: 27.07.1995
(51) Int. Cl.: B29C 35/06

(54) **Longitudinal continuous kiln for drying and vulcanizing rubber profiles**

(30) Priority: 01.08.1994 ES 9401691
(71) Applicant: Gomez Barragan, Amelia, E-28006 Madrid (ES)
(72) Inventor: Gomez Barragan, Amelia, E-28006 Madrid (ES)
(74) Representative: Munoz Garcia, Antonio

(57) **Abstract**

A kiln (1) consisting of a upper chamber (2) carrying hot air, a lower chamber (3) having inside a belt (11) conveying profiles or products (10), the calories of the air mass from the upper chamber (2) being exchanged to a profile (10) which moves within the lower chamber (3) by means of convectors (8) fitted with diffusers (9) driven by the compressed air entering inside the diffusers thru a nozzle or similar (4), being re-conducted via channelings (6) and complementaries (7), heating the surface and the mass of the products (10) at the desired temperature, depending on the energy introduced into the upper chamber (2); the kiln being fitted with a device recycling the air from the lower chamber (3) to the upper -chamber (2) after being treated and filtered, the air entering under these conditions thru an opening (5).

## Description

### BACKGROUND OF THE INVENTION

The present specification refers to a Patent of Invention concerning a longitudinal continuous kiln for drying and vulcanizing rubber profiles, the obvious purpose of which is to allow rubber profiles to be dried and vulcanized , allowing also a continuity of products, specially products destined to the automotion industry, to be dried.

### FIELD OF THE INVENTION

This invention will find application in the industry devoted to the manufacture of longitudinal kilns.

### RELATED ART

It is well known the existence of a plurality of kilns longitudinal or not, operating in continuity for drying and vulcanizing differents products, such as rubber profiles.

It is also known that the most longitudinal kilns used at present operate in an adequate way, attaining the objective looked for.

Nevertheless, all these kilns, at least those known by the applicant, do not offer the possibility of effecting an exchange of calories of the air mass from the upper chamber to a profile moving within the lower chamber, so attaining consequently an exchange of the most possible performance.

An evident solution to these problems would be to rely on a longitudinal continuous kiln fitted with the features mentioned as the most suitable ones.

### SUMMARY OF THE INVENTION

The longitudinal continuous kiln for drying and vulcanizing rubber profiles of the invention constitutes per se an evident novelty in the field in which it incorporates, since starting from it it is possible to have a kiln fitted with the characteristic that it allows the exchange, in the most possible efficiently manner, of the calories of the air mass from the upper chamber to the profile moving within the lower chamber, special convectors driven by compressed air being used for this operation.

In a more definite manner, the longitudinal continuous kiln for drying and vulcanizing rubber profiles is constituted starting - from a continuous kiln of hot air, formed or configured by two chambers, one of them being located at the upper side, and the other chamber being placed in the lower side, the function of this continuous kiln being to dry products in continuity, and, specially, in order to vulcanize rubber profiles for the automotion industry.

The upper chamber is configured as the chamber carrying hot air, while the lower chamber takes on the task of incorporating the belt conveying the profiles or products to be treated.

Broadly speaking, the longitudinal continuous kiln of the invention is designed for obtaining, in the most possible efficiently manner, an exchange of the air mass from the upper chamber to a profile moving within the lower chamber, for which specifically designed convectors are used, which are driven by compressed air, the convectors causing a hot air flow at high speed, which heats both the mass and the surface of the products at a predetermined temperature, depending on the energy introduced into the upper chamber.

A convergence of temperature, time and speed of the elements to be treated will give as a result to obtain the objective looked for.

The kiln is fitted with a device recycling the air from the lower chamber to the upper chamber after being treated and filtered, so attaining a high total performance and a great energetic saving.

In a second embodiment, it must be pointed out that the non longitudinal continuous kiln for drying and vulcanizing rubber profiles can be constituted, instead of said chambers forming an upper chamber and a lower chamber, by more chambers so that these chambers will generate heat or produce the products, which, if desired in order to increase the production, will be in parallel, and then they can be appplied to every kind of dryings and treatments of products in continuity, being specially designed for vulcanizing rubber profiles or other elastomers for the automotion or building industries.

In this second embodiment, the lower chamber is that generates hot air, while the upper chamber contains the belt conveying the profiles or other products to be treated in the longitudinal continuous kiln.

A feature of this second embodiment, with regard to the kiln, consists of exchanging, in the most efficient manner, the calories of the air mass from the lower chamber to the profile moving inside the upper chamber, orifices communicating both chambers being using for this exchange, so causing a hoy air flow in the upper chamber obtained by pressurized air streams, the flow of hot air being utilized for vulcanizing, the temperature depending on the hot air flow from the energy introduced into the lower chamber.

The hot air mass from the upper chamber, after being filtered and treated in a collector, within which pressurized air passes through, is introduced into the lwer chamber in order to utilize again a great part of its caloric energy, so increasing in a substantial manner the performance of the longitudinal continuous kiln.

### BRIEF DESCRIPTION OF THE DRAWINGS

In order to complement this description and aid to a better understanding of the features of the invention the accompanying drawings, which are a part of this specification, show in an illustrative but non limitative sense, the following:

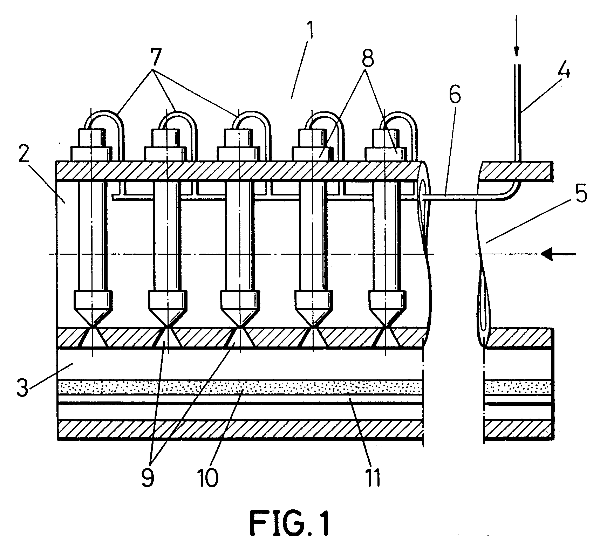

Fig. 1 shows a side elevaional view of a longitudinal continuous kiln for drying and vulcanizing rubber profiles, which is the object of the invention, corresponding to a first embodiment, in which the upper chamber carries the hot air, and the lower - chamber contains the belt conveying the profiles or products to be treated.

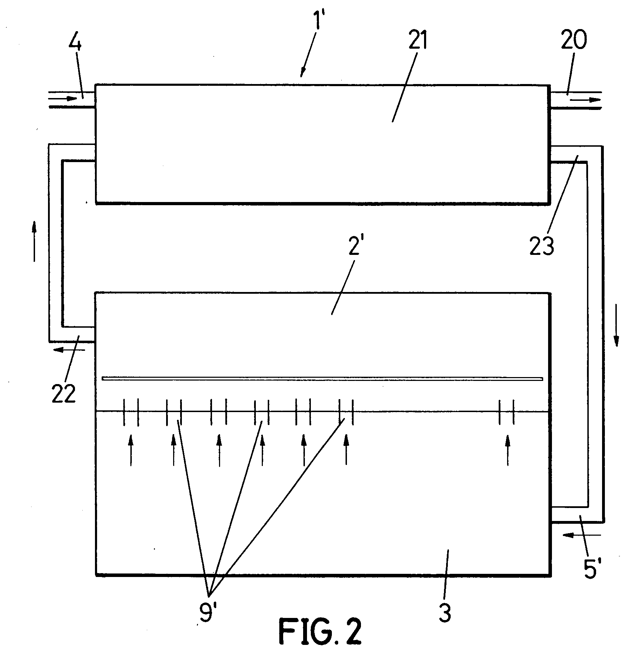

Fig. 2 shows a side elevational view of the longitudinal continuous kiln for drying and vulcanizing rubber profiles, which is the object of the invention, in a second embodiment, in which the lower chamber generates hot air, and the upper chamber contains the belt conveying the profiles of products to be treated, having a collector through which pressurized air passes, which is produced into the lower chamber for utilizing a great part of its caloric energy.

### DETAILED DESCRIPTION OF THE PREFERRED EMBODIMENT

From Fig. 1, it can be seen how the longitudinal continuous kiln for drying and vulcanizing rubber profiles (1) is constituted starting from a upper chamber (2), and a lower chamber (3), there being inside the upper chamber (2) a plurality of aligned convectors (8), which are interconnected by a channeling (6) from which supplementary channelings (7) emerge, directed to each of convectors (8), pressurized air being introduced inside the piping or channeling (6) through a mouth (4). Said air, after being adequately heated by the medium existing in the upper chamber (2), is sent through diffusers (9) inside the lower chamber (3), wherein a profile or element to be treated (10) is located on a conveying belt or similar (11), so attaining the feature contemplated in this embodiement of a longitudinal continuous kiln, of exchanging the calories of the air mass from the upper chamber (2) to a profile moving within the lower chamber (3) by using said convectors (8) fitted with diffusing nozzles (9), which generate a hot air flow at a high speed, which heats both the surface and the mass of products (10) at the desired temperature, depending of course, on the energy introduced into the upper chamber.

It must be pointed out that a convergence of temperature, time and speed of the elements to be treated will give the desired aim.

The kiln has a device recycling the air from the lower chamber to the upper chamber after being treated and filtered, with which a high performance and a great energetic saving are obtained

The upper chamber (2) has a hot air inlet (5).

In a second embodiment, shown in Fig. 2, it can be seen that the longitudinal continuous kiln for drying and vulcanizing ruber profiles (1') is configured as a continuous kiln of hot air consisting of two chambers, a upper chamber (2') and a lower one (3'), but it can have also more chambers, both for generating heat and for conveying the product, arranged in parallel, which will obviously increase the production, and being applicable to every kind of dryings and treatment of products in continuity, specially for vulcanizing rubber profiles or other elastomers specifically destined to the automotion or building industries.

The lower chamber (3') generates hot air, and the upper chamber (2') contains a belt (11) (not shown in Fig. 22) conveying profiles (10) or products to be treated.

Obviously, the lower chamber (3') has an inlet and an outlet for the profiles (10).

A feature of the longitudinal continuous kiln (1'), contemplated in this second embodiment, is configured starting from the capacity of exchanging, with the most efficiency as possible, the calories of the air mass from the lower chamber (3') to the profile (10) moving within the upper chamber. To this end, some - orifices (9') communicating both chambers (2') and (3') are used, on which, by means of pressurized air streams, a hot air flow is generated in the upper chamber (2'), which is utilized for vulcanizing, the temperature depending on the energy introduced into the lower chamber (3')

It is to be pointed out that the hot air mass from the upper chamber (2'), which has been utilized in the vulcanizing operation of the product (10), is channeled, after being used, over a conduct (22) to be cleaned and utilizes its heat, entering a filter (21), being later reconducted via a channeling (23) fitted with an inlet (5') to the lower chamber (3'), so obtaining consequently that the hot air, filtered and cleaned, will be utilized as regard its temperature for acting together with the temperature existing in the pressurized air lower chamber (3'), passing thru nozzles or similar (9') inside the upper chamber (2'), and being recycled again.

Lastly, it should be noted that the filter (21) has an inlet for the pressurized air (4'), and an outlet for the clean cold air (20).

It is not considered necessay to extend this description for an expert in the art to understand the scope of the invention and the advantages derived from it.

The materials, shape, size and arrangements of the components are open to variation, provided that it does not imply any alteration to the essence of the invention.

The terms under which this specification has been described should be always taken in an ample and not limitative sense.

## Claims

**1.-** A longitudinal continuous kiln for drying and vulcanizing rubber profiles applicable to perform every sort of dryings of products in continuity, specially for vulcanizing rubber profiles destined to the automotion industry, characterized in that it is constituted starting from two chambers, a upper chamber (2), and a lower chamber (3), the upper chamber (2) carrying hot air, and the lower chamber (3) containing a belt (11) for conveying profiles (10) or other products to be treated, the upper chamber (2) having a plurality of convectors (8) which are - arranged aligned inside it, fitted with diffusing nozzles (9), there being inside the convectors (8) a pressurized air flow through an inlet (4), which, by means of a conduct or channeling (6), is incorporated, by means of unitary derivations (7), into each of the convectors (8), the pressurized hot air at a predetermined temperature emerging toward the lower chamber (3) via some diffusers (9).

**2.-** A longitudinal continuous kiln for drying and vulcanizing rubber profiles, as per claim 1, characterized in that the kiln exchanges the calories of the air mass of the upper chamber (2) to the profile (10) moving on the conveying belt (11) inside the lower chamber (3), the product (10) receiving a hot air flow at high speed emerging from the diffusers (9), heating both the surface and the mass of products (10) at the desired temperature depending on the energy introduced into the upper chamber (2), the kiln having a device for recycling the air of the lower chamber (3) to the upper chamber (2), after being treated and filtered, the air entering the chamber (2) through an inlet (5),

**3.-** A longitudinal continuous kiln for drying and vulcanizing rubber profiles, as per the preceding claims, characterized in that in a second embodiment, the upper chamber (2') and the lower chamber (3') can be aligned with a plurality of similar chambers, both for generating heat (2') and for conveying (3') the product (11), arranged in parallel, the lower chamber (3') being the one generating hot air, and the upper chamber (2') containing the belt (11) conveying the profiles or products (10) to be treated.

**4.-** A longitudinal continuous kiln for drying and vulcanizing rubber profiles, as per claim 3, characterized in that the calories of the air mass from the lower chamber (3') fall on the profile (10) moving within the upper chamber (2), by using some perforations (9') communicating both chambers (2') and (3'). causing pressurized air streams producing a flow of hotair in the upper chamber (2') which is utilized for vulcanizing, depending on the temperature of the energy introduced into the lower chamber (3').

**5.-** A longitudinal continuous kiln for drying and vulcanizing rubber profiles, as per claim 3 and 4, characterized in that the kiln is capable of recycling the hot air mass from the upper chamber (2') to the lower chamber (3'), after reconducting the hot air over a channeling (22) until a filter (21), in which the hot air is cleaned and filtered being reconducted over a channeling or conduct (23) intil an inlet (5') connected with the lower chamber (3'), the filter (21) having an inlet for the pressurized air (4'), and an outlet for the clean and cold ait (20).
